# EUROPEAN PATENT SPECIFICATION

(11) **EP 2 248 427 B1**
(45) Date of publication and mention of the grant of the patent: **15.05.2019**
(21) Application number: 09702491.3
(22) Date of filing: 16.01.2009
(51) Int. Cl.: A21D 13/80, A21D 2/18, A23G 3/50

(54) **BAKED CAKE CONTAINING 1-KESTOSE AND METHOD OF PRODUCING THE SAME**
GEBACKENER KUCHEN, DER 1-KESTOSE ENTHÄLT, SOWIE VERFAHREN ZU SEINER HERSTELLUNG
GÂTEAU CUIT AU FOUR CONTENANT DU 1-KESTOSE ET SON PROCÉDÉ DE PRODUCTION

(30) Priority: 18.01.2008 JP 2008009055
(43) Date of publication of application: 10.11.2010
(73) Proprietor: Meiji Co., Ltd., Chuo-Ku Tokyo (JP)
(72) Inventor: ISHII, Atsushi, Tokyo 104-8002 (JP); ISHIDA, Kunio, Tokyo 104-8002 (JP)
(74) Representative: Regimbeau
(86) International application number: PCT/JP2009/050557
(87) International publication number: WO 2009/091035

(56) References cited:
- EP-A1- 2 233 006
- WO-A1-2006/115136
- US-A- 4 681 771
- '1-Kestose' FOOD SCIENCE vol. 46, no. 2, 10 January 2004, pages 81 - 87, XP003008789
- 'Ringo no Kasane Yaki.' GREEN TABLE., [Online] no. 193, 2001, XP008142266 Retrieved from the Internet: <URL:http://www. hokuren.or.jp/greenweb/recipe/green/193.htm l>, <URL:http://www.hokuren.or.jp/cgi-bin/green web/ recipe/bin/xRecipe Detail.cgi>> [retrieved on 2009-03-03]
- 'Ringo no Box Cake.' GREEN TABLE., [Online] 2001, XP008142267 Retrieved from the Internet: <URL:URL:http://www. hokuren.or.jp/greenweb/recipe/green/197.htm l>, <URL:http://www.hokuren.or.jp/cgi-bin/green web/ recipe/bin/xRecipe Detail.cgi>> [retrieved on 2009-03-03]

## Description

### Technical Field

The present invention relates to baked confectionery comprising 1-kestose, which is a constituent of fructooligosaccharides.

### Background Art

Oligosaccharides are known to have various physiological functions, such as decay resistance, the effect of promoting bifidobacterium growth, the effect of improving the metabolism of lipids such as cholesterol, the effect of regulating immunity, and the effect of inhibiting a rise in blood sugar level, making them industrially very useful as functional food ingredients. There are various types of oligosaccharides, for example, fructooligosaccharides, galactooligosaccharides, xylooligosaccharides, and lactulose, most of which are mixtures of saccharides. For example, oligosaccharides marketed under the name of fructooligosaccharides are those in which one or more fructose residues are bound to sucrose by β2→1 bonds; they are mixtures of oligosaccharides, 1-kestose in which one fructose residue is bound to a sucrose unit, nistose in which two fructose residues are bound to a sucrose unit, and fructosylnystose in which three fructose residues are bound to a sucrose unit. 1-kestose, as well as nistose and fructofuranosylnystose, have physiologically active functions characteristic of fructooligosaccharides.

Examples of confectionery products using crystalline 1-kestose so far reported include bean-paste products, chocolate, tablet confectionery, and candies (for example, US 4 681 771, as well as Japanese Patent Publication Nos. 159/1997, 65829/1997, 75035/1997, and 57/1998).

However, baked confectionery that can be made on an industrial scale using crystalline 1-kestose has not been reported yet.

### Summary of the Invention

The present inventors have found that dough containing an oligosaccharide and a water-containing oil and fat is difficult to shape because of its tendency to become glutinous or not to retain its shape sufficiently enough to be rolled (Comparative Examples 1 to 7). Although dough having such a poor strength, adhesion, or the like may be usable for making homemade products at home or the like, it is difficult to use in shaping steps that are mechanically conducted in industrial-scale production, such as rolling with a roller, cutting with an embossing cutter, and scrap collection after cutting. Moreover, even if dough in such a state is forcibly baked to make baked confectionery, the resulting baked confectionery will have a poor shape and texture, and lack a quality that can be offered as commercial products.

The present inventors have also found that, when crystalline 1-kestose is used as an oligosaccharide, dough containing flour and a water-containing oil and fat can be shaped, enabling industrial-scale production of baked confectionery having the physiologically active functions characteristic of the oligosaccharide (Examples 1 to 7). The present invention is based on this finding.

An object of the present invention is to provide baked confectionery that have excellent physiologically active functions of oligosaccharides, and can be made on an industrial scale.

According to the present invention, there is provided a method for producing a baked confectionery which comprises shaping dough prepared by using ingredients comprising flour, a saccharide comprising 30 to 100% by weight of crystalline 1-kestose, and an oil and fat comprising a water-containing oil and fat comprising 15 to 100%, by weight of a water-containing oil and fat, and baking the dough, wherein the dough contains a starch ingredients other than flour, the amount of crystalline 1-kestose is 15 to 100 parts by weight of the starch ingredients including flour, and the water-containing oil and fat is a water-in-oil emulsified oil and fat, and the amount of water-containing oil and fat is 15 to 300 parts by weight per 100 parts by weight of the crystalline 1-kestose. (hereinafter, this method is also referred to as the "production method according to the present invention").

According to the present invention, there is provided a baked confectionery comprising flour, a saccharide comprising 30 to 100% by weight of crystalline 1-kestose, and an oil component derived from a water-containing oil and fat, which is obtainable by the method according to the present invention, provided that langue de chat, cigarette cookies, cakes, chou, and rice confectionery, as well as confectionery which is made by preparing the dough by utilizing the gelatinization of starches, are excluded.

1-kestose used in the present invention has various physiological functions of oligosaccharides, such as decay resistance, the effect of promoting bifidobacterium growth, the effect of improving the metabolism of lipids such as cholesterol, the effect of regulating immunity, and the effect of inhibiting a rise in blood sugar level. Thus, the present invention can advantageously impart excellent physiologically active functions of oligosaccharides to baked confectionery that can be easily ingested for snacking or satisfying a slight hunger, and can also make such baked confectionery on an industrial scale.

### Detailed Description of the Invention

### Baked Confectionery and Ingredients Thereof

The term "baked confectionery" as used herein means confectionery made by preparing dough using flour, oils and fats, and saccharides as main ingredients, and baking the dough, Examples of "baked confectionery" include biscuits, cookies, sable cookies, pies, and pretzels. The "baked confectionery" according to the present invention are defined by the claims and exclude confectionery which is made by preparing the dough by utilizing the gelatinization of starches, and not by gluten formation (for example, rice confectionery such as rice crackers, *arare* (rice-cake cubes), and *okaki* (sliced and dried rice cakes)).

The dough of the baked confectionery according to the present invention contains a starch ingredient other than flour. Examples of the starch ingredient other than flour include cereals such as corn powder, rice powder, and mashed potato; processed cereal products such as cornstarch, tapioca starch, potato starch, and processed starches,

In the baked confectionery according to the present invention, the amount of the oil and fat can be 10 to 70 parts by weight, and preferably 20 to 50 parts by weight per 100 parts by weight of the starch ingredients (including flour).

In the baked confectionery according to the present invention, the amount of the saccharide is 15 to 100 parts by weight, and preferably 20 to 60 parts by weight per 100 parts by weight of the starch ingredients (including flour).

The baked confectionery according to the present invention can optionally contain other ingredients commonly used in the production of baked confectionery alone or in suitable combinations, in amounts such that a baked confectionery can be made. Examples of the other ingredients that can be added include dairy products such as whole milk powder, dried skim milk, milk, condensed milk, and raw cream; cocoa powder; dietary fibers; salt; fruit juices; eggs; vitamins; minerals; sweeteners such as aspartame, sucralose, acesulfame potassium, and stevia; leavening agents such as baking soda, ammonium carbonate, and baking powder; emulsifiers such as sugar esters, monoglycerol esters, and sorbitan esters; and thickeners such as xanthan gum, guar gum, and carragheenan,

The baked confectionery according to the present invention can be provided in, for example, forms in which solids such as nuts and dried fruits are dispersed in the baked confectionery; forms in which the baked confectionery are filled with jams and fillings; and forms in which the baked confectionery are coated with chocolate and the like. However, these solids, fillings, coatings, and the like are not included in the ingredients.

The dough of the baked confectionery according to the present invention uses at least a water-containing oil and fat as an oil and fat.

The term "oil and fat" as used herein means an oil-based ingredient used in the production of the baked confectionery (for example, an ingredient containing 60% by weight or more of oil component), and does not include an ingredient simply containing oil component in its components (for example, eggs, milk, and raw cream) or the oil component. Examples of the oil and fat include butter, margarine, shortening, fat-spreads, and refined oils and fats.

The water-containing oil and fat means water-in-oil (W/O) emulsified compositions in which water is dispersed in oil, for example, butter, margarine, water-containing shortening, and water-containing fat-spread,

In the dough of the baked confectionery according to the present invention, the amount of the water-containing oil and fat in the total oil and fat is 15 to 100% by weight.

As will be shown in the Examples, it has been confirmed that, when baked confectionery are made by using a water-containing oil and fat, the use of various oligosaccharides results in dough that is glutinous or forms lumps, thus making it difficult to shape the dough (Comparative Examples 1 to 7). However, the use of crystalline 1-kestose as an oligosaccharide allows the dough to be easily shaped (Examples 1 to 7).

Therefore, the dough of the baked confectionery according to the present invention uses at least crystalline 1-kestose as a saccharide.

The crystalline 1-kestose used in the present invention can be a commercially available product.

The crystalline 1-kestose used in the present invention can be prepared according to a known method (for example, the method described in WO97/021718).

In the dough of the baked confectionery according to the present invention, the amount of 1-kestose in the total saccharide ingredients is 30 to 100% by weight, but is preferably 40 to 100% by weight, in order to provide the physiologically active functions of 1-kestose.

In the baked confectionery according to the present invention, the amount of the crystalline 1-kestose is 15 to 100 parts by weight, and more preferably 15 to 60 parts by weight per 100 parts by weight of the starch ingredients including flour.

Examples of the saccharide ingredient other than crystalline 1-kestose include monosaccharides such as fructose and glucose; disaccharides such as sucrose, lactose, maltose, and trehalose; sugar alcohols such as maltitol, lactitol, erythritol, reduced palatinose, xylitol, and sorbitol; and starch syrup.

Additionally, an oligosaccharide other than crystalline 1-kestose can be used as a saccharide ingredient other than crystalline 1-kestose, in an amount such that sheet-based shaping is not adversely affected. The amount of the oligosaccharide other than crystalline 1-kestose can be 10 parts by weight or less, and preferably 5 parts by weight or less per 100 parts by weight of the starch ingredients (in this case, the amount of the oligosaccharide other than crystalline 1-kestose in the total oligosaccharides can be preferably 20% by weight or less) (the data omitted).

When 1-kestose only or 1-kestose and a sugar alcohol only is used as a saccharide or saccharides contained in the baked confectionery, an abrupt rise in blood sugar level after the ingestion of the baked confectionery can be inhibited.

The amount of the water-containing oil and fat per 100 parts by weight of crystalline 1-kestose (when an oligosaccharide other than crystalline 1-kestose is also included, the amount of the water-containing oil and fat per 100 parts by weight of the total oligosaccharides) is 15 to 300 parts by weight, preferably 15 to 280 parts by weight (for example, 30 to 280 parts by weight or 100 to 280 parts by weight), and more preferably 15 to 250 parts by weight (for example, 30 to 250 parts by weight or 100 to 250 parts by weight).

### Method for Producing Baked Confectionery

The production of the baked confectionery according to the present invention can be carried out by suitably employing a conventionally used method. For example, a baked confectionery can be made by preparing dough (a composition) by mixing the above-mentioned ingredients, shaping the dough, and subsequently baking the dough.

Examples of the methods for preparing dough include a sugar batter method and a flour batter method, with the sugar batter method being preferred because it is advantageously used in industrial mass production.

In the sugar batter method, dough is prepared as follows: a saccharide and an oil and fat are mixed, and subsequently, cream is prepared by mixing liquid ingredients such as milk, eggs, and water to be added. The obtained cream is mixed with flour to prepare dough. The sugar batter method is advantageously used when a large amount of flour is added, because gluten does not easily develop, and the powder is unlikely to fly up,

The total proportion of water content and oil content in the dough prepared by the production method according to the present invention is 25 to 40% by weight, and preferably 30 to 40% by weight.

The "water component " contained in the dough includes not only water component contained in water-based ingredients such as water and milk, but also includes water component contained in various ingredients such as flour, eggs, butter, and margarine. The "oil component " contained in the dough includes not only oil component contained in oils and fats such as butter, margarine, and shortening, but also includes oil component contained in various ingredients such as eggs and milk.

The dough prepared by the method according to the present invention has strength and viscoelasticity such that it can be formed into a sheet and cut by the cutter.

Therefore, the shaping is preferably sheet-based shaping in the production method according to the present invention.

The term "sheet-based shaping" as used herein means a shaping in which the dough is formed into a sheet having a given thickness, and then cut out of the sheet. In industrial-scale production, sheet-based shaping can be specifically performed by mechanically conducting, for example, steps such as a step of rolling dough with a roller or the like; a step of cutting the rolled dough with an embossing cutter or the like; and a step of separating and collecting the scrap.

If dough has a high adhesion, it will easily adhere to a production machine in each of various sheet-based shaping steps, making it impossible to improve the productivity. Furthermore, if dough lacks a given strength, separation and collection of a scrap will be difficult in a scrap collection step, making it impossible to improve the productivity.

The dough prepared by the production method according to the present invention has strength and viscoelasticity that facilitates mechanical sheet-based shaping, and therefore, is advantageously used in industrial mass production utilizing sheet-based shaping.

The dough prepared by the production method according to the present invention can be applied to the baked confectionery made by sheet-based shaping, but can also be applied to the baked confectionery made without sheet-based shaping (for example, langue de chat, cigarette cookies, cakes, and chou).

The production method according to the present invention can be carried out at an industrial level where the amount of the dough per batch is preferably about 50 to 2,000 kg.

According to a preferred embodiment of the production method according to the present invention, there is provided a method for producing a baked confectionery, which comprises preparing dough by mixing, using the sugar batter method, a composition comprising flour; a saccharide comprising crystalline 1-kestose (the amount of the saccharide per 100 parts by weight of the starch ingredients including flour is 15 to 100 parts by weight, and the proportion of the crystalline 1-kestose in the saccharide is 40 to 100% by weight); and an oil and fat comprising a water-containing oil and fat (for example, the amount of the oil and fat per 100 parts by weight of the starch ingredients including flour is 10 to 70 parts by weight, and the proportion of the water-containing oil and fat in the oil and fat is 15 to 100% by weight); sheet-based shaping the dough; and subsequently baking the dough; wherein the total proportion of water content and oil content in the dough is 30 to 40% by weight.

According to a further preferred **embodiment** of the production method according to the present invention, there is provided a method for producing a baked confectionery, which comprises preparing dough by mixing, using the sugar batter method, a composition comprising flour; a saccharide comprising crystalline 1-kestose (for example, the amount of the saccharide per 100 parts by weight of the starch ingredients including flour is 15 to 100 parts by weight, and the proportion of the crystalline 1-kestose in the saccharide is 40 to 100% by weight); and an oil and fat comprising a water-containing oil and fat (for example, the amount of the oil and fat per 100 parts by weight of the starch ingredients including flour is 10 to 70 parts by weight, and the proportion of the water-containing oil and fat in the oil and fat is 15 to 100% by weight); sheet-based shaping the dough; and subsequently baking the dough; wherein the total proportion of water content and oil content in the dough is 30 to 40% by weight; and the amount of the water-containing oil and fat is 15 to 280 parts by weight per 100 parts by weight of the crystalline 1-kestose.

According to a preferred embodiment of the production method according to the present invention, there is provided a method for producing a baked confectionery, which comprises preparing dough by mixing, using the sugar batter method, a composition comprising flour; a saccharide comprising crystalline 1-kestose (for example, the amount of the saccharide per 100 parts by weight of the starch ingredients including flour is 15 to 100 parts by weight, and the proportion of the crystalline 1-kestose in the saccharide is 40 to 100% by weight); and an oil and fat comprising a water-containing oil and fat (for example, the amount of the oil and fat per 100 parts by weight of the starch ingredients including flour is 10 to 70 parts by weight, and the proportion of the water-containing oil and fat in the oil and fat is 15 to 100% by weight); sheet-based shaping the dough; and subsequently baking the dough; wherein the total proportion of water content and oil content in the dough is 30 to 40% by weight; the amount of the water-containing oil and fat is 15 to 280 parts by weight per 100 parts by weight of the crystalline 1-kestose; and the sheet-based shaping is mechanically conducted.

The baked confectionery according to the present invention can contain 10 to 50% by weight of the saccharide on a dry weight basis. Moreover, the baked confectionery according to the present invention can contain 5 to 50% by weight of 1-kestose on a dry weight basis.

The baked confectionery according to the present invention can contain 7 to 30% by weight of oil component on a dry weight basis. Moreover, the baked confectionery according to the present invention can contain 5 to 30% by weight of an oil component derived from a water-containing oil and fat on a dry weight basis.

Preferred embodiments of the baked confectionery according to the present invention are baked confectionery produced by the production method according to the preferred embodiments according to the present invention.

According to the present invention, the following aspects of the invention are provided.
(1) A cookie as defined by the claims, obtained using a water-containing oil and fat, wherein crystalline 1-kestose is used.
(2) The cookie according to item (1), containing 10 to 50% of a saccharide and 7 to 40% of oil component on a dry weight basis.
(3) The cookie according to item (1) or (2), wherein the amount of the water-containing oil and fat is 15 to 460 parts by weight per 100 parts by weight of an oligosaccharide.
(4) The cookie according to any of items (1) to (3), wherein the amount of the crystalline 1-kestose is 15 to 100 parts by weight per 100 parts by weight of a starch ingredient.
(5) The cookie according to any of items (1) to (4), wherein the amount of the 1-kestose contained therein is 40 to 100% by weight based on the amount by weight of the saccharide.
(6) The cookie according to any of items (1) to (5), which is made from dough wherein the total amount of water content and oil content contained in the dough is 30 to 40% by weight based on the amount by weight of the dough.
(7) The cookie according to any of items (1) to (6), using only an oligosaccharide, or an oligosaccharide and a sugar alcohol, as a saccharide ingredient or ingredients.
(8) The cookie according to any of items (1) to (7), prepared by the sugar batter method.

### Examples

The present invention will be described in greater detail with reference to the following examples. Examples 1-6 do not fall within the scope of the claims and are provided for information. In the Examples, "%" represents % by weight unless otherwise specified.

### Example 1

100 parts by weight of flour (water content: about 14%); 40 parts by weight of butter (water content: about 16%, oil content: about 84%); 30 parts by weight of 1-kestose (trade name: Meioligo CR, manufactured by Meiji Seika Kaisha, Ltd.; a crystalline powder containing 97% or more of 1-kestose); 1 part by weight of salt; 0.5 part by weight of baking soda; and 10 parts by weight of water were used to prepare dough according to the sugar batter method. The total amount of water content and oil content contained in the dough was about 35%. The dough was easily rolled. The dough was made into a 4 mm thick sheet using a triple roll sheeter and a gauge roll, and the dough sheet was cut with an embossing cutter with a diameter of 60 mm. The scrap resulted from cutting was collected and used by mixing with new dough. These sheet-based shaping steps were mechanically conducted. The resulting dough with a diameter of 60 mm was baked at 180°C for 20 minutes, thereby preparing cookies having a crispy texture.

### Comparative Example 1

Dough was prepared as in Example 1, except that 30 parts by weight of 1-kestose were replaced with 30 parts by weight of a fructooligosaccharide (trade name: Meioligo P, manufactured by Meiji Seika Kaisha, Ltd.; an amorphous powder containing 95% or more of a mixture of 1-kestose, nistose, and fructosylnystose), However, the dough was glutinous and adhered to the line; moreover, the separation and collection of the scrap was difficult. For this reason, the production was thereafter stopped,

### Comparative Example 2

Dough was prepared as in Example 1, except that 30 parts by weight of 1-kestose were replaced with 30 parts by weight of a galactooligosaccharide (trade name: CUP-oligo P, manufactured by Nissin Sugar Manufacturing Co., Ltd.; an amorphous powder containing 70% or more of a galactooligosaccharide (a mixture of oligosaccharides such as 4'-galactosyl-lactose) and 30% or less of monosaccharides and lactose). However, the dough was glutinous and adhered to the line; moreover, the separation and collection of the scrap was difficult. For this reason, the production was thereafter stopped.

### Comparative Example 3

Dough was prepared as in Example 1, except that 30 parts by weight of 1-kestose were replaced with 30 parts by weight of a xylooligosaccharide (trade name: Xylo-oligo 95P, manufactured by Suntory Ltd.; an amorphous powder containing 95% or more of a mixture of xylobiose, xylotriose, and the like). However, the dough was glutinous and adhered to the line; moreover, the separation and collection of the scrap was difficult. For this reason, the production was thereafter stopped.

### Comparative Example 4

Dough was prepared as in Example 1, except that 30 parts by weight of 1-kestose were replaced with 30 parts by weight of lactulose (trade name: Milk Oligosaccharide MLC-97, manufactured by MORINAGA MILK INDUSTRY CO., LTD.; a crystalline powder containing 97% or more of lactulose). However, the dough was powdery and did not retain its shape to be rolled. For this reason, the production was thereafter stopped.

### Example 2

The procedure of Example 1 was repeated, except that 40 parts by weight of butter were replaced with 40 parts by weight of margarine (water content: about 16%, oil content: about 84%). As a result, satisfactory dough was obtained, enabling the production of cookies having a crispy texture.

### Comparative Example 5

Dough was prepared as in Example 2, except that 30 parts by weight of 1-kestose were replaced with 30 parts by weight of a fructooligosaccharide. However, the dough was glutinous and adhered to the line; moreover, the separation and collection of the scrap was difficult. For this reason, the production was thereafter stopped.

### Example 3

The procedure of Example 1 was repeated, except that 40 parts by weight of butter were replaced with 5 parts by weight of butter and 35 parts by weight of shortening containing no water. As a result, satisfactory dough was obtained, enabling the production of cookies having a crispy texture.

### Comparative Example 6

Dough was prepared as in Example 3, except that 30 parts by weight of 1-kestose were replaced with 30 parts by weight of a fructooligosaccharide. However, the dough was glutinous and adhered to the line; moreover, the separation and collection of the scrap was difficult. For this reason, the production was thereafter stopped.

### Example 4

The procedure of Example 1 was repeated, except that 30 parts by weight of 1-kestose were replaced with 15 parts by weight of 1-kestose and 15 parts by weight of sugar. As a result, satisfactory dough was obtained, enabling the production of cookies having a crispy texture.

### Example 5

The procedure of Example 4 was repeated, except that 15 parts by weight of sugar were replaced with 15 parts by weight of maltitol. As a result, satisfactory dough was obtained, enabling the production of cookies having a crispy texture.

### Comparative Example 7

Dough was prepared as in Example 4, except that 15 parts by weight of 1-kestose were replaced with 15 parts by weight of a fructooligosaccharide. However, the dough was glutinous and adhered to the line; moreover, the separation and collection of the scrap was difficult. For this reason, the production was thereafter stopped.

### Example 6

100 parts by weight of flour (water content: about 14%); 20 parts by weight of butter (water content: about 16%, oil content: about 84%); 60 parts by weight of 1-kestose; 1 part by weight of salt; 0.5 part by weight of baking soda; and 35 parts by weight of water were used to prepare dough according to the sugar batter method. The total amount of water content and oil content contained in the dough was about 32%. The dough was easily rolled. The dough was made into a 4 mm thick sheet using a triple roll sheeter and a gauge roll, and the dough sheet was cut with an embossing cutter with a diameter of 60 mm. The scrap resulted from cutting was collected and used by mixing with new dough. The resulting dough with a diameter of 60 mm was baked at 180°C for 20 minutes, thereby making cookies having a crispy texture.

### Example 7

100 parts by weight of flour (water content: about 14%); 50 parts by weight of margarine (water content: about 16%, oil content: about 84%); 20 parts by weight of 1-kestose; 1 part by weight of salt; 0.5 part by weight of baking soda; and 5 parts by weight of water were used to prepare dough according to the sugar batter method, wherein the amount of the dough per batch was set to 100 kg. The total amount of water content and oil content contained in the dough was about 39%. The dough was easily rolled. The dough was made into a 4 mm thick sheet using a triple roll sheeter and a gauge roll, and the dough sheet was cut with an embossing cutter with a diameter of 60 mm. The scrap resulted from cutting was collected and used by mixing with new dough. The resulting dough with a diameter of 60 mm was baked at 180°C for 20 minutes, thereby making cookies having a crispy texture.

The foregoing results confirmed that satisfactory dough is not obtained not only when using an amorphous oligosaccharide, but also when using crystalline lactulose (Comparative Examples 1 to 5); whereas satisfactory dough is obtained when using crystalline 1-kestose, enabling the production of cookies (Examples 1 and 2).

It was also confirmed that similar effects were obtained when using an oil and fat other than a water-containing oil and fat as an oil and fat, together with a water-containing oil and fat (Example 3 and Comparative Example 6). It was also confirmed that similar effects were obtained when using a saccharide other than an oligosaccharide as a saccharide, together with an oligosaccharide (Examples 4 and 5, and Comparative Example 7).

## Claims

1. A method for producing a baked confectionery, which comprises sheet-based shaping dough prepared by using ingredients comprising flour, a saccharide comprising 30 to 100% by weight crystalline 1-kestose, and an oil and fat comprising 15 to 100% by weight a water-in-oil emulsified oil and fat, and baking the dough,
wherein
the dough contain a starch ingredient other than flour,
the amount of the crystalline 1-kestose is 15 to 100 parts by weight of the starch ingredients including flour, and
the amount of the water-in-oil emulsified oil and fat is 15 to 300 parts by weight per 100 parts by weight of the crystalline 1-kestose, and wherein the preparing of the dough by utilizing the gelatinization of starches is excluded.

2. The method according to claim 1, wherein the total proportion of water content and oil content in the dough is 25 to 40% by weight.

3. The method according to claim 1, wherein the water-in-oil emulsified oil and fat include butter, margarine, shortening, fat-spreads, and refined oils and fats

4. Baked confectionery obtainable by the process according to any of the previous claims, comprising flour, a saccharide comprising 30 to 100% by weight crystalline 1-kestose, and an oil component derived from a water-containing oil and fat,
provided that langue de chat, cigarette cookies, cakes, chou, and rice confectionery, as well as confectionery which is made by preparing the dough by utilizing the gelatinization of starches, are excluded.

5. The baked confectionery according to claim 4, comprising 10 to 50% by weight of the saccharide and 7 to 30% by weight of oil component on a dry weight basis.

## Patentansprüche

1. Verfahren zur Herstellung einer gebackenen Konditorware, umfassend lagenbasiertes Formen eines Teiges, zubereitet unter Verwendung von Zutaten, umfassend Mehl, ein Saccharid, umfassend 30 bis 100 Gew.-% kristalline 1-Kestose, und ein Öl und Fett, umfassend 15 bis 100 Gew.-% eines Wasser-in-Öl emulgierten Öls und Fettes, und Backen des Teiges,
wobei
der Teig eine andere Stärkezutat als Mehl enthält,
die Menge der kristallinen 1-Kestose 15 bis 100 Gewichtsteile der Stärkezutaten, einschließlich Mehl, beträgt und
die Menge des Wasser-in-Öl emulgierten Öls und Fettes 15 bis 300 Gewichtsteile pro 100 Gewichtsteile der kristallinen 1-Kestose beträgt, und
wobei das Zubereiten des Teiges unter Verwendung der Gelatinierung von Stärken ausgeschlossen ist.

2. Verfahren nach Anspruch 1, wobei der Gesamtanteil von Wassergehalt und Ölgehalt in dem Teig 25 bis 40 Gew.-% beträgt.

3. Verfahren nach Anspruch 1, wobei das Wasser-in-Öl emulgierte Öl und Fett Butter, Margarine, Shortening, Streichfette und raffinierte Öle und Fette einschließt.

4. Gebackene Konditorware, erhältlich durch das Verfahren nach einem der vorstehenden Ansprüche,
umfassend Mehl, ein Saccharid, umfassend 30 bis 100 Gew.-% kristalline 1-Kestose, und eine Ölkomponente, abgeleitet von einem wasserhaltigen Öl und Fett,
mit der Maßgabe, dass Katzenzunge, Zigarettenkekse, Kuchen, Chou und Reiskonditorware sowie Konditorware, die durch Zubereiten des Teiges unter Verwendung der Gelatinierung von Stärken hergestellt wird, ausgeschlossen sind.

5. Gebackene Konditorware nach Anspruch 4, umfassend 10 bis 50 Gew.-% des Saccharids und 7 bis 30 Gew.-% Ölkomponente auf Trockengewichtsbasis.

## Revendications

1. Procédé de production d'une confiserie cuite au four, qui comprend la mise en forme d'une pâte en feuille préparée à l'aide d'ingrédients comprenant de la farine, un saccharide comprenant de 30 à 100 % en poids de 1-kestose cristallin, et une huile et matière grasse comprenant de 15 à 100 % en poids d'huile et de matière grasse en émulsion eau dans l'huile, et la cuisson au four de la pâte,
dans lequel
la pâte contient un ingrédient de type amidon autre que la farine,
la quantité de 1-kestose cristallin est de 15 à 100 parties en poids des ingrédients de type amidon, farine comprise, et
la quantité d'huile et de matière grasse en émulsion eau dans l'huile est de 15 à 300 parties en poids pour 100 parties en poids de 1-kestose cristallin,
et dans lequel la préparation de la pâte par utilisation de la gélatinisation des amidons est exclue.

2. Procédé selon la revendication 1, dans lequel la proportion totale de teneur en eau et teneur en huile de la pâte est de 25 à 40 % en poids.

3. Procédé selon la revendication 1, dans lequel l'huile et la matière grasse en émulsion eau dans l'huile comprennent le beurre, la margarine, les huiles végétales, les pâtes grasses à tartiner, et les huiles et graisses affinées.

4. Confiserie cuite au four pouvant être obtenue par le procédé selon l'une quelconque des revendications précédentes, comprenant de la farine, un saccharide comprenant de 30 à 100 % en poids de 1-kestose cristallin, et un composant huile dérivé d'huile et de matière grasse contenant de l'eau,
à condition que les langues de chat, les cigarettes russes, les cakes, les choux, et les confiseries à base de riz, ainsi que les confiseries qui sont élaborées par préparation de la pâte par utilisation de la gélatinisation des amidons, soient exclus.

5. Confiserie cuite au four selon la revendication 4, comprenant 10 à 50 % en poids de saccharide et 7 à 30 % en poids de composant huile sur une base en poids sec.
